# EUROPEAN PATENT SPECIFICATION

(11) **EP 3 556 550 B1**
(45) Date of publication and mention of the grant of the patent: **22.10.2025**
(21) Application number: 19169570.9
(22) Date of filing: 16.04.2019
(51) Int. Cl.: B32B 5/02, B29C 70/40, B32B 5/24, B32B 7/04, B32B 7/12, B32B 27/12, B32B 27/14, B32B 27/30, B32B 27/32, B32B 27/34, B29C 70/08, B32B 37/00, B32B 3/00, B32B 3/14, B32B 3/16, B29C 70/46, B32B 7/05, B32B 27/08

(54) **PROCESS OF PRODUCING A COMPOSITE MATERIAL AND COMPOSITE MATERIAL**
PROCESS OF PRODUCING A COMPOSITE MATERIAL AND COMPOSITE MATERIAL
PROCESS OF PRODUCING A COMPOSITE MATERIAL AND COMPOSITE MATERIAL

(30) Priority: 16.04.2018 EP 18167626; 17.04.2018 IT 201800004623
(43) Date of publication of application: 23.10.2019
(73) Proprietor: Paola Lenti S.r.l., 20129 Milano (MI) (IT)
(72) Inventor: LENTI, Paola, 20821 Meda (IT)
(74) Representative: Simino, Massimo

(56) References cited:
- EP-A2- 0 224 064
- GB-A- 2 114 055

## Description

The present invention relates to a process of producing a composite material as defined in the preamble of claim 1 and to a composite material.

In manufacturing processes, there is an increasing need for composite materials which, in addition to special technical requirements, e.g. sturdiness, durability and wear resistance, also have satisfactory aesthetic properties, to greatly appeal to users of products formed with these materials.

This need is particularly felt for rigid products such as a seat or backrest of a chair, a tile or a self-supporting shell of a suitcase.

For simplicity, the present disclosure is given, by way of example and without limitation, with particular reference to a composite material suitable for use in the fabrication of a backrest or seat of a chair, but the same considerations apply to other items such as semirigid or rigid suitcases, tiles, cases, containers, container boxes, slats, lamps lampshade structures and others.

It shall be further noted that, as used herein, the term "rigid material" is meant to designate a solid material a solid material having a self-supporting structure that cannot be rolled or folded upon itself.

Backrests or seats of chairs and the like are known to be supported by the chair structure and must be able to withstand the weight of a user, or at most exhibit a slight elastic deformation under the load.

Backrests and/or seats are currently formed with various types materials such as wood, metal and plastic materials.

The use of plastic materials is particularly appreciated in the fabrication of chairs that may have complex shapes, because the various parts may be fabricated with molding techniques in a quick, quality-consistent and cost-effective manner.

On the other hand, the use of molded plastic materials creates aesthetic issues, because the achievable results are far from those achieved with seats and backrests made of wood or upholstered with fabric, covered with cane and the like.

It shall be noted in this respect that a strong need is currently felt for parts, such as a seat or a backrest of a chair that, despite being fabricated by molding or similar techniques, have a finer aesthetic appearance, like the one that can be obtained using upholstery fabrics or cane.

Concerning upholstered or cane seats or backrests, it shall be further noted that exposure to weather, e.g. for chairs also suitable for outdoor use, as well as the mechanical rubbing action caused by the movement of chair users will lead to severe wear of the covering material, resulting in quick deterioration of the chairs during use.

In an attempt to at least partially obviate these problems, it is also known to employ chairs having structural parts, such as seats or backrests, entirely formed with plastic woven or knitted fabrics, but the fabrication of these chairs is rather complicated and expensive, also considering the required underlying bearing structure and finishing.

As an alternative to the above, the prior art GB 2114055 A and the like disclose the possibility to use a first layer of reinforcing fibers impregnated and entirely immersed in an impregnating material to obtain the formation of a composite material.

EP 0 224 064 discloses fiber-reinforced thermoplastic mouldings produced by pressing together a sheet of thermoplastic and fibre preforms above the melting temperature of the thermoplastic to impregnate the fibres.

Nevertheless, the fibers are entirely embedded in the composite material and can provide no contribution to a finer aesthetic appearance, like the one that can be obtained using upholstery fabrics or cane.

This invention is based on the problem of providing a process of producing a composite material, which has such structural and functional characteristics as to fulfill the above need, while obviating the above prior art drawbacks.

This problem is solved by a process of producing a composite material as defined in claim 1.

According to another aspect, the problem is also solved by a composite material as defined in claim 9.

Further features and advantages of the process of fabricating the composite material of the present invention as well as the composite material obtained with the process will result from the following description of a few preferred embodiments thereof, which is given by way of illustration and without limitation with reference to the accompanying figures, in which:

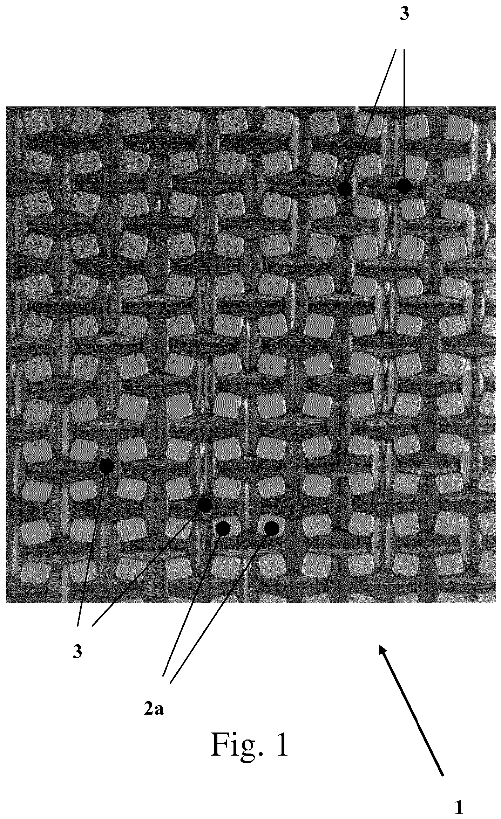

- Figure 1 shows a top view of a portion of the composite material of the invention according to a particular embodiment;

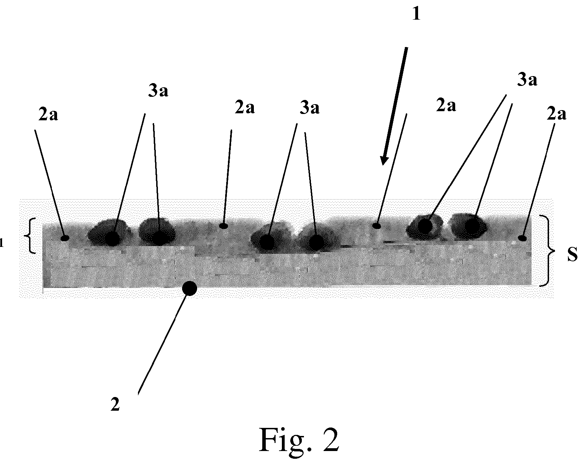

- Figure 2 shows a portion of a cross sectional plan view of the composite material of Figure 1;

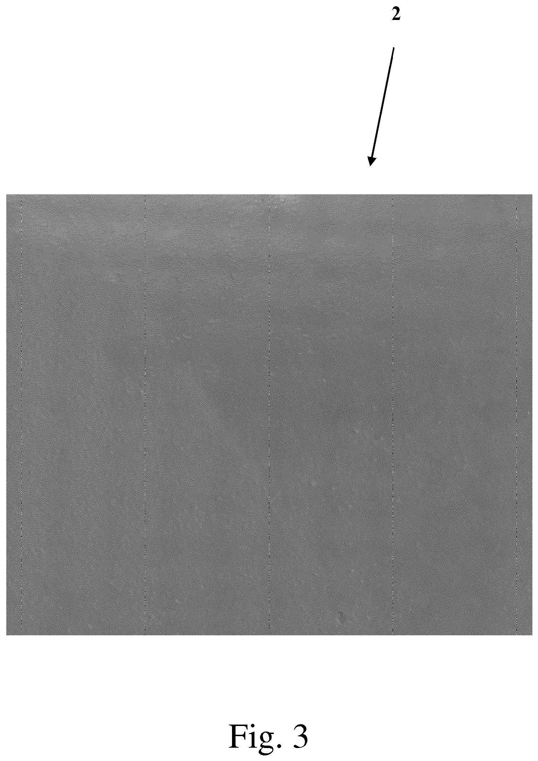

- Figure 3 shows a top view of the base layer of the composite material of Figure 1 before application of an upper layer;
- Figure 4 shows a plan view of the upper layer of the composite material of Figure 1 before application of a base layer and
- Figure 5 shows a perspective view of a chair having the backrest and the seat formed with the material of Figure 1.

Referring to the accompanying figures, numeral 1 generally designates a composite material according to the invention.

The composite material 1 comprises a first rigid layer, i.e. a solid-state layer, 2 of a first polymeric material, whereof one side is penetrated by a second layer 3 of a second material to form a composite layer of predetermined thickness S with said first layer 2, wherein:
- said second layer 3 comprises an alternation of solid areas 3a,3b and through openings 3c throughout the thickness of said second layer 3;
- portions 2a of the first layer 2 fit into the through openings 3c of the second layer 3.

Therefore, the material of the first layer 2 partially fills the through openings 3c of the second layer 3, whereby the material of the second layer 3 is embedded in the material that forms the rigid layer of the first layer 2.

As shown in the figures, the material of the second layer 3 is partially embedded in the material that forms the rigid layer of the first layer 2, such that one side of the material of the second layer 3 will be always exposed to the outside of the layer of composite material defined by the combination of the rigid layer of the first layer 2 and the second layer 3 embedded therein.

Preferably, the polymeric material of the first rigid layer 2 is a thermoplastic polymeric material.

Preferably, the thermoplastic material of the first rigid layer 3 is a material comprising or based on polypropylene.

Alternatively, the thermoplastic material of the first rigid layer 3 may be selected from the group comprising: polyethylene or polythene PE, polystyrene PS, polymethyl metacrylate PMMA, poltvinyl chloride PVC; polyacrylonitrile-butadiene-styrene ABS, polyacrylonitrile PAN, polyethylene terephthalate PET, polyamide PA, polycarbonate PC, polybutylene terephthalate PBT and polytetrafluoroethylene PTFE.

Preferably, the first rigid layer 2 is a continuous layer.

Preferably, the first rigid layer 2 forms the upper layer of a multilayer composite material.

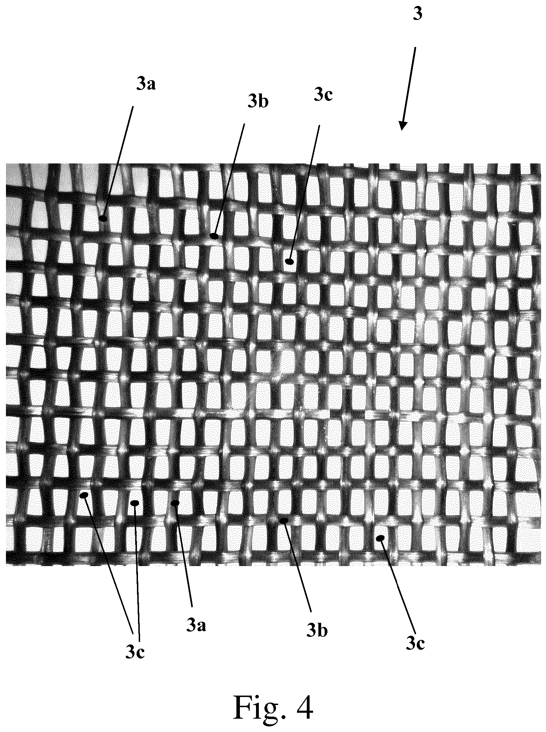

Preferably, the aforementioned portions 2a of the first layer 2 fit into said through openings 3c of the second layer 3 and reach beyond a second side of the second layer 3 facing away from the aforementioned first side whereby, in the thickness S of the composite panel 1 the free ends of the portions 2a form respective undercuts with the remaining portions of the first side of the first rigid layer 2 in which portions of said second layer 3 are received and held (see Figure 4).

This will provide a firm mechanical connection of the second layer 3 with the first layer 2, such that one side of the material of the second layer 3 will be always exposed to the outside of the layer of composite material defined by the combination of the rigid layer of the first layer 2 and the second layer 3 embedded therein.

According to a not shown alternative embodiment, the aforementioned portions 2a of the first layer 2 fit into the through openings 3c of the second layer 3 to be substantially flush with the second side of the second layer 3, facing away from the first side.

According to a not shown different embodiment, the aforementioned portions 2a of the first layer 2 fit into the through openings 3c of the second layer 3 and terminate below the second side of the second layer 3 facing away from the aforementioned first side, such that one side of the material of the second layer 3 will be always exposed to the outside of the layer of composite material defined by the combination of the rigid layer of the first layer 2 and the second layer 3 embedded therein.

According to one embodiment, at least the portions of the second layer 3 that are designed to contact the first layer 2:
- either comprise a polymeric material or
- are coated with a polymeric material, preferably a polymeric material that is identical to or of the same type as the polymeric material of the first layer (2).

According to one embodiment, at least the portions of the second layer 3 that are designed to contact the first layer 2 comprise or are coated with a material that is compatible with and similar to the material of the first layer 2, to ensure adhesion with the material of the first layer 2.

Preferably, the second layer 3 comprises a weft 3a and warp 3b fabric (see figure 4), a knit and/or a weave of continuous threads or yarns.

Preferably, the aforementioned continuous threads or yarns:
- comprise or are coated with a polymeric material, preferably a polymeric material that is identical to or of the same type as (i.e. compatible with and/or similar to) the polymeric material of said first layer 2, or
- comprise or are coated with a material that is compatible with and similar to the material of the first layer 2, to ensure adhesion with the material of the first layer 2.

According to one embodiment, therebetween the first layer 2 and the second layer 3 there may be:
- an adhesive and/or
- a primer to impart compatibility with and affinity to the second layer 3 relative to said first layer 2 and ensure adhesion of the material of the second layer 3 with the material of the first layer 2.

The composite material 1 of the invention may be used to form various hard items, i.e. items required to have self-supporting and resistance properties as defined above.

In particular, advantages derive from the fact that while the second layer 3 is exposed on the outer surface of the composite layer 1, it is intimately bonded thereto, due to the affinity between the materials of the two layers and/or due to the presence of an adhesive and due to a mechanical connection obtained by portions of the first layer 2 fitting into the through openings of the layer 3.

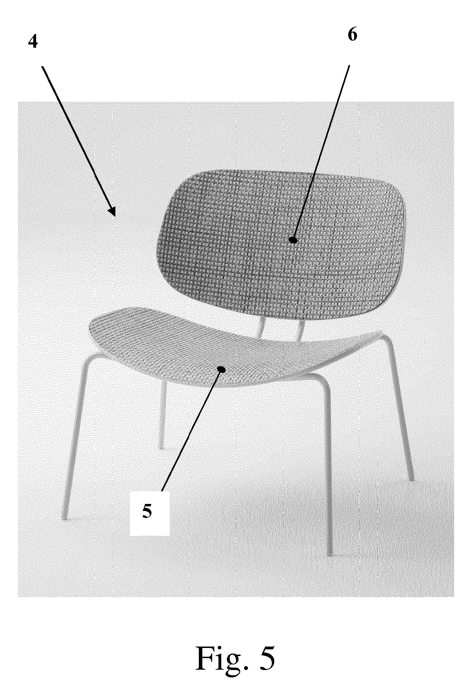

According to the embodiment of Figure 5, the items formed with the material 1 are the seat 5 and the backrest 6 of a chair 4.

Nevertheless, it shall be understood that various different items may be formed with the material 1, such as semi-rigid or rigid suitcases, tiles, covering cases, containers, container boxes, slats, lamp o lampshade structures and others.

According to the invention, the process of making the composite material 1 as discussed above comprises the steps of:
I) providing a first rigid layer 2, i.e. a solid-state layer, of a polymeric material;
II) providing a second layer 3, having a predetermined thickness, of a second material at the solid-state, said second layer comprising an alternation of solid areas 3a, 3b and through openings 3c throughout the thickness of said second layer 3;
**III)** heating said first rigid layer 2, to cause a surface portion of predetermined thickness s₁ of said first rigid layer 2 to be softened from a first side of said first rigid layer 2;
**IV)** placing a first side of said second layer 3 on said first softened side of said first rigid layer 2, to thereby obtain an intermediate product composed of two superimposed layers 2, 3 and
**V)** while said surface portion of predetermined thickness s₁ of said first layer 2 is softened, pressing said second layer 3 against said first layer 2 to cause portions 2a of said softened surface portion of said first layer 2 to fit into the through openings 3c of said second layer 3, one side of the material of the second layer 3 being always exposed to the outside of the layer of composite material defined by the combination of the rigid layer of the first layer 2 and the second layer 3 embedded therein.

Preferably, as mentioned above, the aforementioned portions 2a of the first layer 2 fit into the through openings 3c of the second layer 3 and reach beyond a second side of the second layer 3 facing away from said first side so that, in the thickness S of the composite panel 1 the free ends of the portions 2a form respective undercuts with the remaining portions of the first side of the first rigid layer 2, the portions of the second layer 3 being hence received and held in such undercuts, one side of the aforementioned material of the second layer 3 being always exposed to the outside of the layer of composite material defined by the combination of the rigid layer of the first layer 2 and the second layer 3 embedded therein.

According to a different embodiment, not shown, the aforementioned portions 2a of the first layer 2 fit into the aforementioned through openings 3c of the second layer 3 to be substantially flush with or terminate below a second side of the second layer 3 facing away from the aforementioned first side, still such that one side of the material of the second layer 3 will be always exposed to the outside of the layer of composite material defined by the combination of the rigid layer of the first layer 2 and the second layer 3 embedded therein.

Preferably, the aforementioned step of V) of pressing said second layer 3 against said first layer 2 is continued until said surface portion of predetermined thickness s₁ of said first rigid layer 2 is hardened.

Preferably, the aforementioned step V) of pressing the second layer 3 against the first layer 2 is carried out by pressing the aforementioned intermediate product between matched molds. By this arrangement, the degree of penetration of the second layer 3 in the softened portion of the first layer 2 may be adjusted. In short, by simply adjusting the limit-stop distance between the matched molds varying degrees of penetration of the second layer 3 in the first layer 2 may be obtained.

Preferably, the matched molds have two flat surfaces that are pressed against each other to compress and incorporate the second layer 3 in the first layer 2.

Preferably, the aforementioned step III) of heating the first rigid layer 2 is continued at least during part of the aforementioned step V) of pressing the second layer 3 against the first layer 2.

Preferably, at least the portions of the second layer 3 that are designed to contact the first layer 2:
- either comprise a polymeric material or
- are coated with a polymeric material, preferably a polymeric material that is equal to or of the same type as the polymeric material of said first layer 2.

Preferably, at least the portions of the second layer 3 that are designed to contact the first layer 2 comprise or are coated with a material that is compatible with and similar to the material of the first layer 2, to ensure adhesion with said softened material of said first layer 2.

Preferably, the second layer comprises a weft 3a and warp 3b fabric 3 and/or a knit of continuous threads or yarns.

According to a different embodiment, the second layer comprises a weave of continuous threads or yarns.

Preferably, the aforementioned continuous threads or yarns:
- comprise or are coated with a polymeric material, preferably a polymeric material that is equal to or of the same type as the polymeric material of the first layer 2, or
- comprise or are coated with a material that is compatible with and similar to the material of the first layer 2, to ensure adhesion with the softened material of the first layer 2.

According to one embodiment, the process includes interposing therebetween the first layer 2 and the second layer 3:
- an adhesive and/or
- a primer to impart compatibility and affinity to said second layer 3 relative to said first layer 2 and ensure adhesion of the material of said second layer 3 with the softened material of the first layer 2.

As clearly shown in the above description, the process of producing a composite material according to the present invention and the composite material of the present invention fulfill the aforementioned need and also obviate the prior art drawbacks as set out in the introduction of this disclosure.

In particular, the provision of the second layer is suitable to mimic the presence of a fabric, a knit, a weave or another material, embedded on the surface of the first rigid layer.

Those skilled in the art will obviously appreciate that a number of changes and variants may be made to the process of producing a composite material and the composite material as described hereinbefore, without departure from the scope of the invention, as defined in the following claims.

Thus, for example, the composite layer 1 may have one or more covering layers, for example transparent layers or others, that can impart particular finishing effects to its surface.

## Claims

1. **A process** of making a composite material comprising a first rigid layer (2) of a first material, whereof one side is penetrated by a second layer (3) of a second material applied thereto to form a composite layer of predetermined thickness (S), said process comprises the steps of:
**I)** providing a first rigid layer (2) of a polymeric material at the solid-state, said first rigid layer (2) being a continuous layer and
**II)** providing a second layer (3) of a second material at the solid-state, having a predetermined thickness, said second layer comprising an alternation of solid areas (3a, 3b) and through openings (3c);
**characterized in that** said process comprises the steps of:
**III)** heating said first rigid layer (2), to cause a surface portion of predetermined thickness (s₁) of said first rigid layer (2) to be softened from a first side of said first rigid layer (2);
**IV)** placing a first side of said second layer (3) on said first softened side of said first rigid layer (2), to thereby obtain an intermediate product composed of two superimposed layers (2, 3) and
**V)** while said surface portion of predetermined thickness (s₁) of said first layer (2) is softened, pressing said second layer (3) against said first layer (2) to cause portions (2a) of said softened surface portion of said first layer (2) to penetrate into the through openings (3c) of said second layer (3),
to have the material of the second layer (3) partially embedded in the material that forms the rigid layer of the first layer (2O), such that in the composite material:
- the material of the second layer 3 is partially embedded in the material that forms the rigid layer of the first layer (2);
- one side of the material of the second layer (3) is always exposed to the outside of the layer of the composite material and
- it is provided a firm mechanical connection of the second layer (3) with the first layer (2).

2. A process as claimed in claim 1, wherein the polymeric material of said first rigid layer (2) is a thermoplastic polymeric material at the solid-state.

3. A process as claimed in claim 1 or 2, wherein the polymeric material of said first rigid layer (2) is a polypropylene-based material and/or is selected from the group comprising: polyethylene or polythene (PE), polystyrene (PS), polymethyl metacrylate (PMMA), poltvinyl chloride (PVC); polyacrylonitrile-butadiene-styrene (ABS), polyacrylonitrile (PAN), polyethylene terephthalate (PET), polyamide (PA), polycarbonate (PC), polybutylene terephthalate (PBT) and polytetrafluoroethylene (PTFE).

4. A process as claimed in any of claims 1 to 3, wherein:
- said portions (2a) of said first layer (2) penetrate into said through openings (3c) of said second layer (3) and reach beyond a second side of said second layer (3) that faces away from said first side, the free ends of said portions (2a) defining, within the thickness (S) of said composite panel (1), respective undercuts with the remaining portions of said first side of said first rigid layer (2), in which portions of said second layer (3) are received and held, or
- said portions (2a) of said first layer (2) penetrate into said through openings (3c) of said second layer (3) to be substantially flush with a second side of said second layer (3), facing away from said first side.

5. A process as claimed in any of claims 1 to 4, wherein said step **V)** of pressing said second layer (3) against said first layer (2) is continued until said surface portion of predetermined thickness (s₁) of said first rigid layer (2) is hardened.

6. A process as claimed in any of claims 1 to 5, wherein at least the portions of said second layer (3) that are designed to contact said first layer (2):
- comprise a polymeric material or are coated with a polymeric material that is equal to or of the same type as the polymeric material of said first layer (2), or
- comprise or are coated with a material that is compatible with and similar to the material of said first layer (2), to ensure adhesion with said softened material of said first layer (2).

7. A process as claimed in any of claims 1 to 6, wherein said second layer comprises a fabric (3), a knit and/or a weave of continuous threads or yarns which preferably comprise or are coated with a polymeric material, more preferably comprise or are coated with a polymeric material that is equal to or of the same type as the polymeric material of said first layer (2).

8. A process as claimed in any of claims 1 to 7, wherein therebetween said first layer (2) and said second layer (3) there is:
- an adhesive and/or
- a primer to impart compatibility and affinity to said second layer (3) relative to said first layer (2) and ensure adhesion of the material of said second layer (3) with the softened material of said first layer (2).

9. **A composite material** comprising a first rigid layer (2) of a first polymeric material at the solid-state, whereof one side is penetrated by a second layer (3) of a second material at the solid-state to form a composite layer of predetermined thickness (S) with said first layer (2),
**characterized in that**:
- said second layer (3) comprises in said thickness an alternation of solid areas (3a, 3b) and through openings (3c) and
- portions (2a) of said first layer (2) fit into the through openings (3c) of said second layer (3), Whereby:
- the material of the second layer (3) is embedded in the material that forms the rigid layer of the first layer 2;
- one side of the material of the second layer (3) is always exposed to the outside of the layer of the composite material and
- it is provided a firm mechanical connection of the second layer (3) with the first layer (2).

10. A composite material as claimed in claim 9, wherein the polymeric material of said first rigid layer (2) is a thermoplastic polymeric material at solid state, preferably:
- a polypropylene-based material or
- a material selected from the group comprising: polyethylene or polythene (PE), polystyrene (PS), polymethyl metacrylate (PMMA), poltvinyl chloride (PVC); polyacrylonitrile-butadiene-styrene (ABS), polyacrylonitrile (PAN), polyethylene terephthalate (PET), polyamide (PA), polycarbonate (PC), polybutylene terephthalate (PBT) and polytetrafluoroethylene (PTFE).

11. A composite material as claimed in any of claims 9 to 10, wherein said portions (2a) of said first layer (2) fit into said through openings (3c) of said second layer (3) and reach beyond a second side of said second layer (3) that faces away from said first side, the free ends of said portions (2a) defining, within the thickness (S) of said composite panel (1), respective undercuts with the remaining portions of said first side of said first rigid layer (2), in which portions of said second layer (3) are received and held, or
- said portions (2a) of said first layer (2) penetrate into said through openings (3c) of said second layer (3) to be substantially flush with a second side of said second layer (3), facing away from said first side.

12. A composite material as claimed in any of claims 9 to 11, wherein:
- at least the portions of said second layer (3) that are designed to contact said first layer (2):
• either comprise a polymeric material or
• are coated with a polymeric material, preferably a polymeric material that is equal to or of the same type as the polymeric material of said first layer (2), or
- at least the portions of said second layer (3) that are designed to contact said first layer (2) comprise or are coated with a material that is compatible with and similar to the material of said first layer (2), to ensure adhesion with the material of the first layer (2).

13. A composite material as claimed in any of claims 9 to 12, wherein said second layer comprises a fabric (3), a knit and/or a weave of continuous threads yarns.

14. A composite material as claimed in claim 13, wherein said continuous threads or yarns:
- comprise or are coated with a polymeric material, preferably a polymeric material that is equal to or of the same type as the polymeric material of said first layer (2) of polymeric material or
- comprise or are coated with a material that is compatible with and similar to the material of said first layer (2), to ensure adhesion with the material of said first layer (2).

15. A composite material as claimed in any of claims 9 to 14, wherein therebetween said first layer (2) and said second layer (3) there is:
- an adhesive and/or
- a primer to impart compatibility and affinity to said second layer (3) relative to said first layer (2) and ensure adhesion of the material of said second layer (3) with the material of said first layer (2).

## Patentansprüche

1. **Verfahren** zur Herstellung eines Verbundmaterials, das eine erste starre Schicht (2) aus einem ersten Material umfasst, deren eine Seite von einer darauf aufgetragenen zweiten Schicht (3) aus einem zweiten Material durchdrungen wird, um eine Verbundschicht mit vorbestimmter Dicke (S) zu bilden, wobei das Verfahren die folgenden Schritte umfasst:
**I)** Bereitstellen einer ersten starren Schicht (2) aus einem polymeren Material im festen Zustand, wobei die erste starre Schicht (2) eine durchgehende Schicht ist, und
**II)** Bereitstellen einer zweiten Schicht (3) aus einem zweiten Material im festen Zustand mit einer vorbestimmten Dicke, wobei die zweite Schicht einen Wechsel von festen Bereichen (3a, 3b) und Durchgangsöffnungen (3c) umfasst;
**dadurch gekennzeichnet, dass** das Verfahren die folgenden Schritte umfasst:
**III)** Erwärmen der ersten starren Schicht (2), um zu bewirken, dass ein Oberflächenabschnitt mit vorbestimmter Dicke (s₁) der ersten starren Schicht (2) von einer ersten Seite der ersten starren Schicht (2) erweicht wird;
**IV)** Auflegen einer ersten Seite der zweiten Schicht (3) auf die erste erweichte Seite der ersten starren Schicht (2), um dadurch ein Zwischenprodukt zu erhalten, das aus zwei übereinanderliegenden Schichten (2, 3) besteht, und
**V)** während der Oberflächenabschnitt mit vorbestimmter Dicke (s₁) der ersten Schicht (2) erweicht wird, Pressen der zweiten Schicht (3) gegen die erste Schicht (2), um zu bewirken, dass Abschnitte (2a) des erweichten Oberflächenabschnitts der ersten Schicht (2) in Durchgangsöffnungen (3c) der zweiten Schicht (3) eindringen,
um das Material der zweiten Schicht (3) teilweise in das Material eingebettet zu haben, das die starre Schicht der ersten Schicht (20) bildet, so dass in dem Verbundmaterial:
- das Material der zweiten Schicht (3) teilweise in das Material eingebettet ist, das die starre Schicht der ersten Schicht (2) bildet;
- eine Seite des Materials der zweiten Schicht (3) stets der Außenseite der Schicht des Verbundmaterials hin freiliegt und
- eine feste mechanische Verbindung der zweiten Schicht (3) mit der ersten Schicht (2) vorgesehen ist.

2. Verfahren nach Anspruch 1, wobei das polymere Material der ersten starren Schicht (2) ein thermoplastisches polymeres Material im festen Zustand ist.

3. Verfahren nach Anspruch 1 oder 2, wobei das polymere Material der ersten starren Schicht (2) ein Material auf Polypropylenbasis ist und/oder aus der Gruppe ausgewählt ist, die Polyethylen oder Polyethylen (PE), Polystyrol (PS), Polymethylmetacrylat (PMMA), Poltvinylchlorid (PVC); Polyacrylnitril-Butadien-Styrol (ABS), Polyacrylnitril (PAN), Polyethylenterephthalat (PET), Polyamid (PA), Polycarbonat (PC), Polybutylenterephthalat (PBT) und Polytetrafluorethylen (PTFE) umfasst.

4. Verfahren nach einem der Ansprüche 1 bis 3, wobei:
- die Abschnitte (2a) der ersten Schicht (2) in die Durchgangsöffnungen (3c) der zweiten Schicht (3) eindringen und über eine der ersten Seite abgewandte zweite Seite der zweiten Schicht (3) hinausreichen, wobei die freien Enden der Abschnitte (2a) innerhalb der Dicke (S) der Verbundplatte (1) jeweilige Hinterschneidungen mit den übrigen Abschnitten der ersten Seite der ersten starren Schicht (2) definieren, in denen Abschnitte der zweiten Schicht (3) aufgenommen und gehalten werden, oder
- die Abschnitte (2a) der ersten Schicht (2) in die Durchgangsöffnungen (3c) der zweiten Schicht (3) eindringen, so dass sie im Wesentlichen mit einer zweiten Seite der zweiten Schicht (3) bündig sind, die von der ersten Seite abgewandt ist.

5. Verfahren nach einem der Ansprüche 1 bis 4, wobei der Schritt **V)** des Pressens der zweiten Schicht (3) gegen die erste Schicht (2) fortgesetzt wird, bis der Oberflächenabschnitt mit vorbestimmter Dicke (s₁) der ersten starren Schicht (2) gehärtet ist.

6. Verfahren nach einem der Ansprüche 1 bis 5, wobei zumindest die Abschnitte der zweiten Schicht (3), die dazu bestimmt sind, die erste Schicht (2) zu berühren:
- ein polymeres Material umfassen oder mit einem polymeren Material beschichtet sind, das gleich oder vom gleichen Typ wie das polymere Material der ersten Schicht (2) ist, oder
- ein Material umfassen oder damit beschichtet sind, das mit dem Material der ersten Schicht (2) kompatibel und diesem ähnlich ist, um eine Haftung mit dem erweichten Material der ersten Schicht (2) sicherzustellen.

7. Verfahren nach einem der Ansprüche 1 bis 6, wobei die zweite Schicht ein Gewebe (3), ein Gestrick und/oder ein Geflecht aus Endlosfäden oder -garnen umfasst, die vorzugsweise ein polymeres Material umfassen oder damit beschichtet sind, und die bevorzugter ein polymeres Material umfassen oder damit beschichtet sind, das gleich oder vom gleichen Typ wie das polymere Material der ersten Schicht (2) ist.

8. Verfahren nach einem der Ansprüche 1 bis 7, wobei sich zwischen der ersten Schicht (2) und der zweiten Schicht (3) befindet:
- einen Klebstoff und/oder
- eine Grundierung, um der zweiten Schicht (3) Kompatibilität und Affinität relativ zu der ersten Schicht (2) zu verleihen und die Haftung des Materials der zweiten Schicht (3) mit dem erweichten Material der ersten Schicht (2) zu gewährleisten.

9. **Verbundmaterial** umfassend eine erste starre Schicht (2) aus einem ersten polymeren Material im festen Zustand, von der eine Seite von einer zweiten Schicht (3) aus einem zweiten Material im festen Zustand durchdrungen wird, um mit der ersten Schicht (2) eine Verbundschicht mit vorbestimmter Dicke (S) zu bilden,
**dadurch gekennzeichnet, dass**:
- die zweite Schicht (3) in dieser Dicke einen Wechsel von festen Bereichen (3a, 3b) und Durchgangsöffnungen (3c) umfasst und
- Abschnitte (2a) der ersten Schicht (2) in die Durchgangsöffnungen (3c) der zweiten Schicht (3) passen,
Wobei:
- das Material der zweiten Schicht (3) in das Material eingebettet ist, das die starre Schicht der ersten Schicht (2) bildet;
- eine Seite des Materials der zweiten Schicht (3) stets der Außenseite der Schicht des Verbundmaterials hin freiliegt und
- eine feste mechanische Verbindung der zweiten Schicht (3) mit der ersten Schicht (2) vorgesehen ist.

10. Verbundmaterial nach Anspruch 9, wobei das polymere Material der ersten starren Schicht (2) ein thermoplastisches polymeres Material im festen Zustand ist, vorzugsweise:
- ein Material auf Polypropylenbasis oder
- ein Material ausgewählt aus der Gruppe umfassend: Polyethylen oder Polyethylen (PE), Polystyrol (PS), Polymethylmetacrylat (PMMA), Polvinylchlorid (PVC); Polyacrylnitril-Butadien-Styrol (ABS), Polyacrylnitril (PAN), Polyethylenterephthalat (PET), Polyamid (PA), Polycarbonat (PC), Polybutylenterephthalat (PBT) und Polytetrafluorethylen (PTFE).

11. Verbundmaterial nach einem der Ansprüche 9 bis 10, wobei die Abschnitte (2a) der ersten Schicht (2) in die Durchgangsöffnungen (3c) der zweiten Schicht (3) passen und über eine der ersten Seite abgewandte zweite Seite der zweiten Schicht (3) hinausreichen, wobei die freien Enden der Abschnitte (2a) innerhalb der Dicke (S) der Verbundplatte (1) jeweilige Hinterschneidungen mit den übrigen Abschnitten der ersten Seite der ersten starren Schicht (2) definieren, in denen Abschnitte der zweiten Schicht (3) aufgenommen und gehalten werden, oder
- die Abschnitte (2a) der ersten Schicht (2) in die Durchgangsöffnungen (3c) der zweiten Schicht (3) eindringen, so dass sie im Wesentlichen mit einer zweiten Seite der zweiten Schicht (3) bündig sind, die von der ersten Seite abgewandt ist.

12. Verbundmaterial nach einem der Ansprüche 9 bis 11, wobei:
- zumindest die Abschnitte der zweiten Schicht (3), die dazu bestimmt sind, die erste Schicht (2) zu berühren:
• entweder ein polymeres Material umfassen oder
• mit einem polymeren Material beschichtet sind, vorzugsweise einem polymeren Material, das gleich oder vom gleichen Typ wie das polymere Material der ersten Schicht (2) ist, oder
- zumindest die Abschnitte der zweiten Schicht (3), die dazu bestimmt sind, die erste Schicht (2) zu berühren, ein Material umfassen oder damit beschichtet sind, das mit dem Material der ersten Schicht (2) kompatibel und diesem ähnlich ist, um eine Haftung mit dem Material der ersten Schicht (2) sicherzustellen.

13. Verbundmaterial nach einem der Ansprüche 9 bis 12, wobei die zweite Schicht ein Gewebe (3), ein Gestrick und/oder ein Geflecht aus Endlosfäden umfasst.

14. Verbundmaterial nach Anspruch 13, wobei die Endlosfäden oder -garne:
- ein polymeres Material umfassen oder damit beschichtet sind, vorzugsweise ein polymeres Material, das gleich oder vom gleichen Typ wie das polymere Material der ersten Schicht (2) aus polymerem Material ist, oder
- ein Material umfassen oder damit beschichtet sind, das mit dem Material der ersten Schicht (2) kompatibel und diesem ähnlich ist, um eine Haftung mit dem Material der ersten Schicht (2) sicherzustellen.

15. Verbundmaterial nach einem der Ansprüche 9 bis 14, wobei sich zwischen der ersten Schicht (2) und der zweiten Schicht (3) befindet:
- einen Klebstoff und/oder
- eine Grundierung, um der zweiten Schicht (3) Kompatibilität und Affinität relativ zu der ersten Schicht (2) zu verleihen und die Haftung des Materials der zweiten Schicht (3) mit dem Material der ersten Schicht (2) zu gewährleisten.

## Revendications

1. **Procédé de** fabrication d'un matériau composite comprenant une première couche rigide (2) d'un premier matériau, dont un côté est traversé par une seconde couche (3) d'un second matériau appliqué dessus pour former une couche composite d'épaisseur prédéterminée (S), ledit procédé comprenant les étapes suivantes :
**I)** fournir une première couche rigide (2) d'un matériau polymère à l'état solide, ladite première couche rigide (2) étant une couche continue et
**II)** fournir une seconde couche (3) d'un second matériau à l'état solide, d'une épaisseur prédéterminée, ladite seconde couche comprenant une alternance de zones pleines (3a, 3b) et d'ouvertures traversantes (3c) ;
**caractérisé en ce que** ledit procédé comprend les étapes suivantes :
**III)** chauffer ladite première couche rigide (2) afin de ramollir une partie de surface d'une épaisseur prédéterminée (s₁) de ladite première couche rigide (2) à partir d'un premier côté de ladite première couche rigide (2) ;
**IV)** placer un premier côté de ladite seconde couche (3) sur ledit premier côté ramolli de ladite première couche rigide (2), pour obtenir ainsi un produit intermédiaire composé de deux couches superposées (2, 3) et
**V)** pendant que ladite partie de surface d'épaisseur prédéterminée (s₁) de ladite première couche (2) est ramollie, presser ladite seconde couche (3) contre ladite première couche (2) pour faire pénétrer des parties (2a) de ladite partie de surface ramollie de ladite première couche (2) dans les ouvertures traversantes (3c) de ladite seconde couche (3),
le matériau de la seconde couche (3) est partiellement intégré dans le matériau qui forme la couche rigide de la première couche (20), de telle sorte que dans le matériau composite :
- le matériau de la seconde couche (3) est partiellement intégré dans le matériau qui forme la couche rigide de la première couche (2) ;
- un côté du matériau de la seconde couche (3) est toujours exposé à l'extérieur de la couche du matériau composite et
- il assure une liaison mécanique solide entre la seconde couche (3) et la première couche (2).

2. Procédé selon la revendication 1, dans lequel le matériau polymère de ladite première couche rigide (2) est un matériau polymère thermoplastique à l'état solide.

3. Procédé selon la revendication 1 ou 2, dans lequel le matériau polymère de ladite première couche rigide (2) est un matériau à base de polypropylène et/ou est choisi dans le groupe comprenant : le polyéthylène ou polythène (PE), le polystyrène (PS), le polyméthacrylate de méthyle (PMMA), le chlorure de poltvinyle (PVC) ; le polyacrylonitrile-butadiène-styrène (ABS), le polyacrylonitrile (PAN), le polyéthylène téréphtalate (PET), le polyamide (PA), le polycarbonate (PC), le polybutylène téréphtalate (PBT) et le polytétrafluoroéthylène (PTFE).

4. Procédé selon l'une quelconque des revendications 1 à 3, dans lequel :
- lesdites parties (2a) de ladite première couche (2) pénètrent dans lesdites ouvertures traversantes (3c) de ladite seconde couche (3) et dépassent un second côté de ladite seconde couche (3) qui est opposé audit premier côté, les extrémités libres desdites parties (2a) définissant, dans l'épaisseur (S) dudit panneau composite (1), des contre-dépouilles respectives avec les parties restantes dudit premier côté de ladite première couche rigide (2), dans lesquelles des parties de ladite seconde couche (3) sont reçues et maintenues, ou
- lesdites parties (2a) de ladite première couche (2) pénètrent dans lesdites ouvertures traversantes (3c) de ladite seconde couche (3) pour être sensiblement au même niveau qu'un second côté de ladite seconde couche (3), opposé audit premier côté.

5. Procédé selon l'une quelconque des revendications 1 à 4, dans lequel ladite étape **V)** de pressage de ladite seconde couche (3) contre ladite première couche (2) est poursuivie jusqu'à ce que ladite partie de surface d'épaisseur prédéterminée (s₁) de ladite première couche rigide (2) soit durcie.

6. Procédé selon l'une quelconque des revendications 1 à 5, dans lequel au moins les parties de ladite seconde couche (3) destinées à entrer en contact avec ladite première couche (2) :
- comprennent un matériau polymère ou sont revêtues d'un matériau polymère qui est égal ou du même type que le matériau polymère de ladite première couche (2), ou
- comprennent ou sont revêtues d'un matériau compatible et similaire au matériau de ladite première couche (2), afin d'assurer l'adhésion avec ledit matériau ramolli de ladite première couche (2).

7. Procédé selon l'une quelconque des revendications 1 à 6, dans lequel ladite seconde couche comprend un tissu (3), un tricot et/ou un tissage de fils continus qui, de préférence, comprennent ou sont revêtus d'un matériau polymère, plus préférentiellement comprennent ou sont revêtus d'un matériau polymère qui est égal ou du même type que le matériau polymère de ladite première couche (2).

8. Procédé selon l'une quelconque des revendications 1 à 7, dans lequel il y a entre ladite première couche (2) et ladite seconde couche (3) :
- un adhésif et/ou
- une amorce pour conférer une compatibilité et une affinité à ladite seconde couche (3) par rapport à ladite première couche (2) et assurer l'adhésion du matériau de ladite seconde couche (3) avec le matériau ramolli de ladite première couche (2).

9. **Matériau composite** comprenant une première couche rigide (2) d'un premier matériau polymère à l'état solide, dont un côté est pénétré par une seconde couche (3) d'un second matériau à l'état solide pour former une couche composite d'épaisseur prédéterminée (S) avec ladite première couche (2),
**caractérisé en ce que** :
- ladite seconde couche (3) comprend dans ladite épaisseur une alternance de zones pleines (3a, 3b) et d'ouvertures traversantes (3c) et
- les parties (2a) de ladite première couche (2) s'insèrent dans les ouvertures traversantes (3c) de ladite seconde couche (3),
moyennant quoi :
- le matériau de la seconde couche (3) est intégré dans le matériau qui forme la couche rigide de la première couche (2) ;
- un côté du matériau de la seconde couche (3) est toujours exposé à l'extérieur de la couche du matériau composite et
- il assure une liaison mécanique solide entre la seconde couche (3) et la première couche (2).

10. Matériau composite selon la revendication 9, dans lequel le matériau polymère de ladite première couche rigide (2) est un matériau polymère thermoplastique à l'état solide, de préférence :
- un matériau à base de polypropylène ou
- un matériau choisi dans le groupe comprenant : le polyéthylène ou polythène (PE), le polystyrène (PS), le polyméthacrylate de méthyle (PMMA), le chlorure de polyvinyle (PVC) ; le polyacrylonitrile-butadiène-styrène (ABS), le polyacrylonitrile (PAN), le polyéthylène téréphtalate (PET), le polyamide (PA), le polycarbonate (PC), le polybutylène téréphtalate (PBT) et le polytétrafluoroéthylène (PTFE).

11. Matériau composite selon l'une quelconque des revendications 9 à 10, dans lequel lesdites parties (2a) de ladite première couche (2) s'insèrent dans lesdites ouvertures traversantes (3c) de ladite seconde couche (3) et s'étendent au-delà d'un second côté de ladite seconde couche (3) qui est opposé audit premier côté, les extrémités libres desdites parties (2a) définissant, dans l'épaisseur (S) dudit panneau composite (1), des contre-dépouilles respectives avec les parties restantes dudit premier côté de ladite première couche rigide (2), dans lesquelles des parties de ladite seconde couche (3) sont reçues et maintenues, ou
- lesdites parties (2a) de ladite première couche (2) pénètrent dans lesdites ouvertures traversantes (3c) de ladite seconde couche (3) pour être sensiblement au même niveau qu'un second côté de ladite seconde couche (3), opposé audit premier côté.

12. Matériau composite selon l'une quelconque des revendications 9 à 11, dans lequel :
- au moins les parties de ladite seconde couche (3) qui sont destinées à entrer en contact avec ladite première couche (2) :
• comprennent un matériau polymère ou
• sont revêtues d'un matériau polymère,
de préférence un matériau polymère qui est égal ou du même type que le matériau polymère de ladite première couche (2), ou
- au moins les parties de ladite seconde couche (3) destinées à entrer en contact avec ladite première couche (2) comprennent ou sont revêtues d'un matériau compatible et similaire au matériau de ladite première couche (2), afin d'assurer l'adhésion avec le matériau de la première couche (2) .

13. Matériau composite selon l'une quelconque des revendications 9 à 12, dans lequel ladite seconde couche comprend un tissu (3), un tricot et/ou un tissage de fils continus.

14. Matériau composite selon la revendication 13, dans lequel lesdits fils ou fils continus :
- comprennent ou sont revêtus d'un matériau polymère, de préférence un matériau polymère qui est égal ou du même type que le matériau polymère de ladite première couche (2) de matériau polymère ou
- comprennent ou sont revêtus d'un matériau compatible et similaire au matériau de ladite première couche (2), afin d'assurer l'adhésion avec le matériau de ladite première couche (2).

15. Matériau composite selon l'une quelconque des revendications 9 à 14, dans lequel, entre ladite première couche (2) et ladite seconde couche (3), il y a :
- un adhésif et/ou
- une amorce pour conférer une compatibilité et une affinité à ladite seconde couche (3) par rapport à ladite première couche (2) et assurer l'adhésion du matériau de ladite seconde couche (3) avec le matériau de ladite première couche (2).
